(19) Europäisches Patentamt
European Patent Office
Office européen des brevets

(11) **EP 4 476 108 B1**

(12) **EUROPEAN PATENT SPECIFICATION**

(45) Date of publication and mention
of the grant of the patent:
**17.06.2026 Bulletin 2026/25**

(21) Application number: **22708491.0**

(22) Date of filing: **11.02.2022**

(51) International Patent Classification (IPC):
**B60W 30/04** (2006.01)  **B60W 10/22** (2006.01)
**B60W 40/02** (2006.01)  **B60G 17/0165** (2006.01)

(52) Cooperative Patent Classification (CPC):
**B60W 30/04; B60G 17/0165; B60G 17/0182;
B60W 10/22; B60W 40/02;** B60G 2300/026;
B60G 2400/60; B60G 2400/841; B60G 2800/0124;
B60G 2800/704; B60G 2800/9124; B60W 2030/043;
B60W 2300/12; B60W 2510/22; B60W 2530/10;
(Cont.)

(86) International application number:
**PCT/EP2022/053306**

(87) International publication number:
**WO 2023/151801 (17.08.2023 Gazette 2023/33)**

(54) **A CONTROL SYSTEM FOR DETERMINING A REFERENCE SIDE AREA FOR A VEHICLE ENTITY**

STEUERUNGSSYSTEM ZUR BESTIMMUNG EINES REFERENZSEITENBEREICHS FÜR EINE FAHRZEUGEINHEIT

SYSTÈME DE COMMANDE POUR DÉTERMINER UNE ZONE LATÉRALE DE RÉFÉRENCE D'UNE ENTITÉ DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.12.2024 Bulletin 2024/51**

(73) Proprietor: **Volvo Truck Corporation
40508 Göteborg (SE)**

(72) Inventors:
• **LAINE, Leo
  438 94 Härryda (SE)**
• **TAGESSON, Kristoffer
  663 41 Hammarö (SE)**
• **ASKERDAL, Mikael
  439 51 Åsa (SE)**

(74) Representative: **Valea AB
Box 1098
405 23 Göteborg (SE)**

(56) References cited:
**DE-A1- 10 326 190     DE-A1- 102020 004 986
US-B1- 6 185 489**

(52) Cooperative Patent Classification (CPC): (Cont.)
B60W 2530/201; B60W 2540/215; B60W 2555/20;
B60W 2710/22

**Description**

TECHNICAL FIELD

The invention relates to a control system for determining a reference side area for a vehicle entity. Moreover, the invention relates to a vehicle entity. Additionally, the invention relates to a method for determining a reference side area for a vehicle entity.

The invention can be applied in heavy-duty vehicles, such as trucks, buses and construction equipment. Although the invention will be described with respect to a truck, the invention is not restricted to this particular vehicle, but may also be used in other vehicles such as wheel loaders, haulers or the like.

BACKGROUND

A vehicle entity, for instance a vehicle trailer or a truck, may be subjected to wind loads during operation. Such wind loads may for instance result in transversal loads imparted on the vehicle entity which may impair the drive behaviour of the vehicle entity. Moreover, the wind loads may result in a wind induced roll moment that may increase the risk for rollover of the vehicle entity.

To this end, according to its abstract, US 2018/0162400 A1 discloses that one or more devices, systems, and/or methods for controlling a motor vehicle based upon wind are provided. For example, a first measurement of wind detected by a first sensor coupled to the motor vehicle may be received from the first sensor. A second measurement of wind associated with a location of the motor vehicle may be received from a server. A wind effect (e.g., cost, inefficiency, danger, etc.) on the motor vehicle may be determined based upon the first measurement of wind and/or the second measurement of wind. A corrective action for the motor vehicle may be determined based upon the wind effect, and may be implemented on the motor vehicle.

Although the US 2018/0162400 A1 method or device may be used for controlling a vehicle whilst taking wind loads into account, there is still a need for further development within the technical field of vehicle control in response to wind induced loads.

Moreover, according to its abstract, DE 10 2020 004986 A1, a body assembly is described, comprising a chassis device and a cabin device, wherein the cabin device is arranged to be movable above the chassis device in the direction of gravity. The body assembly further comprises a body condition measuring device and an evaluation device, wherein the body condition measuring device is set up to determine an angle difference between the cabin device and the chassis device and to transmit it in the form of an angle difference signal to the evaluation device and/or wherein the body condition measuring device is set up to determine an acceleration of the chassis device and/or the cabin device and to transmit it in the form of an acceleration signal to the evaluation device, wherein the evaluation device is configured to characterize a wind acting on the body assembly from the transmitted signal(s).

SUMMARY

An object according to a first aspect of the present invention is to provide a control system by which it is possible to determine information that can be used for determining wind loads with an appropriate level of accuracy.

As such, a first aspect of the present invention relates to a control system for determining a reference side area for a vehicle entity. The vehicle entity is a vehicle or a vehicle trailer and has a nominal vehicle entity side area. The reference side area is adapted to be multiplied with a side force coefficient for determining a side force parameter proportional to a wind side force load imparted on the vehicle entity and/or to be multiplied with a lift coefficient for determining a lift parameter proportional to a wind lift load imparted on the vehicle entity and/or to be combined with a drag coefficient for determining a drag load imparted on the vehicle entity.

The vehicle entity comprises a load surface adapted to receive a material load such that at least a portion of the material load can be exposed to wind loads. The load surface is associated with a load surface area and a load surface length.

The vehicle entity has a longitudinal extension in a longitudinal direction, a transversal extension in a transversal direction and a vertical extension in a vertical direction such that when the vehicle entity is supported by a horizontally extending ground surface, the vertical direction is parallel to a normal of the horizontally extending ground surface, the longitudinal direction corresponds to an intended direction of travel of the vehicle entity and the transversal direction is perpendicular to each one of the longitudinal direction and the vertical direction.

The load surface area extends in a plane, the normal of which is parallel to the vertical direction. The load surface length extends in the longitudinal direction. Each one of the reference side area and the nominal vehicle entity side area extends in a plane, the normal of which is parallel to the transversal direction.

The control system is adapted to:

- receive density information indicative of a density ($\rho$) of material loaded onto the load surface;
- receive weight information indicative of a weight of material loaded onto the load surface;
- use the density information, the weight information, the load surface area and the load surface length in order to determine a material load surface area, the material load surface area extending in a plane, the normal of which is parallel to the transversal direction, and
- use the material load surface area and the nominal vehicle entity side area in order to determine the reference side area.

The control system in accordance with the first aspect of the present invention implies that a reference side area may be determined taking prevailing conditions of the vehicle entity into account. As such, rather than using a predetermined value of the reference side area when determining wind loads imparted on the vehicle entity, the control system according to the first aspect of the present invention may determine a reference side area that better reflects the actual condition of the vehicle entity. Since a wind load determined using a side force or lift equation generally is proportional to the magnitude of the reference side area, an improved estimate of the reference side area may result in improved estimates of the wind loads imparted on the vehicle entity, as compared to the wind loads that are determined under the assumption that the reference side area is a predetermined value.

Optionally, the control system is adapted to:

- determine a material load surface area portion that is not covered by the vehicle entity, as seen in the transversal direction, and
- add the material load surface area portion to the nominal vehicle entity side area in order to determine the reference side area.

The above implies and appropriate estimate of the reference side area.

Optionally, the control system is adapted to:

- use the density information, the weight information and the load surface area to thereby determine a height of the material load, and
- use the height of the material load and the load surface length in order to determine the material load surface area.

Optionally, the control system is adapted to use a parameter indicative of a width of the vehicle entity in the transversal direction and to determine the side force coefficient on the basis of at least the width of the vehicle entity and the height of the material load.

The side force coefficient is generally dependent on the shape of the body subject to the wind load. For instance, a body having a square cross-sectional shape has a side force coefficient being different from the side force coefficient of a body having an elongate cross-sectional shape. As such, the above-mentioned feature to determine the side force coefficient may further improve the quality of the wind load using the reference side area and the side force coefficient.

Optionally, the control system is adapted to receive wind information for a wind condition currently acting on the vehicle entity. The wind information is indicative of a wind speed, relative to the vehicle entity, and a wind heading, relative to the vehicle entity. The control system is adapted to use the wind information, the reference side area and the side force coefficient for determining a wind side force load imparted on the vehicle entity. Preferably, the wind side force load comprises a wind-imparted roll moment around a roll axle which is parallel to the longitudinal direction.

Optionally, the control system is adapted to receive wind information for a wind condition currently acting on the vehicle entity, the wind information being indicative of a wind speed, relative to the vehicle entity, and a wind heading, relative to the vehicle entity. The control system is adapted to use the wind information, the reference side area and the lift coefficient for determining a wind lift load imparted on the vehicle entity.

Optionally, the vehicle entity comprises a wind sensor adapted to determine the wind information. The control system is adapted to receive the wind information from the wind sensor.

Optionally, the vehicle entity comprises a density input unit via which an operator can enter the density information. The control system is adapted to receive the density information from the density input unit.

Optionally, the control system is adapted to determine a vertical centre and/or a longitudinal centre of the reference side area on the basis of at least the nominal vehicle entity side area, the density information, the weight information and the load surface area. Information indicative of the vertical centre and/or the longitudinal centre may be useful when for instance determining one or more wind induced moments, e.g. a roll moment using the vertical centre or a yaw moment using the longitudinal centre, imparted on the vehicle entity.

Optionally, the vehicle entity comprises a suspension system and the control system is adapted to receive information from and/or to issue information to the suspension system.

Optionally, the control system is adapted to use information from the suspension system as the weight information. The above possibility implies that the need for using separate or dedicated weight sensors may be omitted.

Optionally, the control system is adapted to issue information to the suspension system in dependence on the determined wind side force load imparted on the vehicle entity.

Optionally, the control system is adapted to, in response to detecting that the wind side force load imparted on the vehicle entity results in a rollover risk exceeding a predetermined risk threshold, issue information to the suspension system such that the vehicle entity assumes a condition with a static inclination towards a windward side of the vehicle entity.

A second aspect of the present invention relates to a vehicle entity being a vehicle or a vehicle trailer and having a nominal vehicle entity side area. The vehicle entity comprises a load surface adapted to receive a material load such that at least a portion of the material load can be exposed to wind loads. The load surface is associated with a load surface area and a load surface length.

The vehicle entity has a longitudinal extension in a longitudinal direction, a transversal extension in a transversal direction and a vertical extension in a vertical direction such that when the vehicle entity is supported by a horizontally extending ground surface, the vertical direction is parallel to a normal of the horizontally extending ground surface, the longitudinal direction corresponds to an intended direction of travel of the vehicle entity and the transversal direction is perpendicular to each one of the longitudinal direction and the vertical direction.

The load surface area extends in a plane, the normal of which is parallel to the vertical direction, the load surface length extending in the longitudinal direction, each one of the reference side area and the nominal vehicle entity side area extending in a plane, the normal of which is parallel to the transversal direction.

The vehicle entity comprises a control system according to the first aspect of the present invention.

Optionally, the vehicle entity comprises a suspension system adapted to issue information indicative of the condition of the suspension system.

Optionally, the vehicle entity comprises a wind sensor adapted to determine wind information for a wind load currently imparted on the vehicle entity, the wind information being indicative of a wind speed, relative to the vehicle entity, and a wind heading, relative to the vehicle entity.

Optionally, the vehicle entity comprises a density input unit via which an operator can enter the density information.

A third aspect according to the present invention relates to a method for determining a reference side area for a vehicle entity. The vehicle entity is a vehicle or a vehicle trailer and has a nominal vehicle entity side area. The reference side area is adapted to be multiplied with a side force coefficient for determining a side force parameter proportional to a wind side force load imparted on the vehicle entity and/or to be multiplied with a lift coefficient for determining a lift parameter proportional to a wind lift load imparted on the vehicle entity and/or to be combined with a drag coefficient for determining a drag load imparted on the vehicle entity. The vehicle entity comprises a load surface adapted to receive a material load such that at least a portion of the material load can be exposed to wind loads. The load surface is associated with a load surface area and a load surface length.

The vehicle entity has a longitudinal extension in a longitudinal direction, a transversal extension in a transversal direction and a vertical extension in a vertical direction such that when the vehicle entity is supported by a horizontally extending ground surface, the vertical direction is parallel to a normal of the horizontally extending ground surface, the longitudinal direction corresponds to an intended direction of travel of the vehicle entity and the transversal direction is perpendicular to each one of the longitudinal direction and the vertical direction.

The load surface area extends in a plane, the normal of which is parallel to the vertical direction. The load surface length extends in the longitudinal direction. Each one of the reference side area and the nominal vehicle entity side area extends in a plane, the normal of which is parallel to the transversal direction.

The method comprises:

- receiving density information indicative of a density of material loaded onto the load surface;
- receiving weight information indicative of a weight of material loaded onto the load surface;
- using the density information, the weight information, the load surface area and the load surface length in order to determine a material load surface area, the material load surface area extending in a plane, the normal of which is parallel to the transversal direction, and
- using the material load surface area and the nominal vehicle entity side area in order to determine the reference side area.

Optionally, the method further comprises:

- determining a material load surface area portion that is not covered by the vehicle entity, as seen in the transversal direction, and
- adding the material load surface area portion to the nominal vehicle entity side area in order to determine the reference side area.

Optionally, the method comprises:

- using the density information, the weight information and the load surface area to thereby determine a height of the material load, and
- using the height of the material load and the load surface length in order to determine the material load surface area.

Optionally, the method further comprises using a parameter indicative of a width of the vehicle entity in the transversal direction and determining the side force coefficient on the basis of at least the width of the vehicle entity and the height of the material load.

Optionally, the method further comprises receiving wind information for a wind condition currently acting on the vehicle entity, the wind information being indicative of a wind speed, relative to the vehicle entity, and a wind heading, relative to the vehicle entity. The method comprises using the wind information, the reference side area and the side force coefficient for determining a wind side force load imparted on the vehicle entity. Preferably, the wind side force load comprises a wind-imparted roll moment around a roll axle which is parallel to the longitudinal direction.

Optionally, the method further comprises receiving wind information for a wind condition currently acting on the vehicle entity. The wind information is indicative of a wind speed, relative to the vehicle entity, and a wind heading, relative to the vehicle entity. The method comprises using the wind information, the reference side area and the lift coefficient for determining a wind lift load imparted on the vehicle entity.

Optionally, the vehicle entity comprises a wind sensor adapted to determine the wind information. The method comprises receiving the wind information from the wind sensor.

Optionally, the vehicle entity comprises a density input unit via which an operator can enter the density information. The method comprises receiving the density information from the density input unit.

Optionally, the method comprises determining a vertical centre and/or a longitudinal centre of the reference side area on the basis of at least the nominal vehicle entity side area, the density information, the weight information and the load surface area.

Optionally, the vehicle entity comprises a suspension system and the method comprises receiving information from and/or issuing information to the suspension system.

Optionally, the method comprises using information from the suspension system as the weight information.

Optionally, the method further comprises issuing information to the suspension system in dependence on the determined wind side force load imparted on the vehicle entity.

Optionally, the method comprises, in response to detecting that the wind side force load imparted on the vehicle entity results in a rollover risk exceeding a predetermined risk threshold, issuing information to the suspension system such that the vehicle entity assumes a condition with a static inclination towards a windward side of the vehicle entity.

Further advantages and advantageous features of the invention are disclosed in the following description and in the dependent claims.

BRIEF DESCRIPTION OF THE DRAWINGS

With reference to the appended drawings, below follows a more detailed description of embodiments of the invention cited as examples.

In the drawings:

Fig. 1 is a side view of a vehicle entity according to an embodiment of the present invention;
Fig. 2 is a rear view of the Fig. 1 vehicle entity;
Fig. 3 is a schematic side view illustrating areas of portions of a vehicle entity;
Fig. 4 is a schematic rear view of a vehicle entity;
Fig. 5 is a schematic rear view of a vehicle entity in a tilted condition, and
Fig. 6 is a flowchart illustrating an embodiment of a method according to the present invention.

DETAILED DESCRIPTION OF EXAMPLE EMBODIMENTS OF THE INVENTION

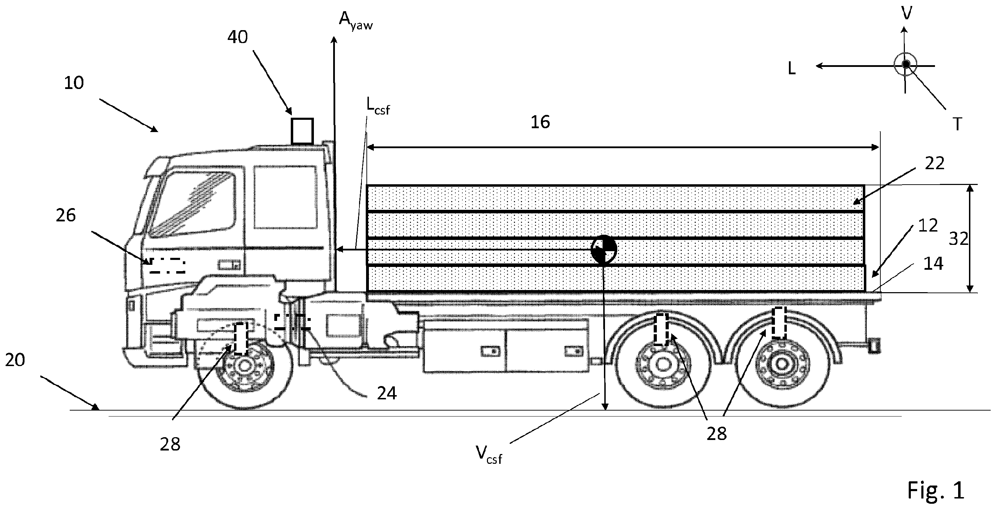

Fig. 1 is a side view of a vehicle entity 10 according to the present invention. In Fig. 1, the vehicle entity 10 is exemplified as a truck. However, it is also envisaged that the vehicle entity 10 according to the present invention may be another type of vehicle, such as a trailer (not shown) or a vehicle combination comprising a tractor and one or more trailers (not shown).

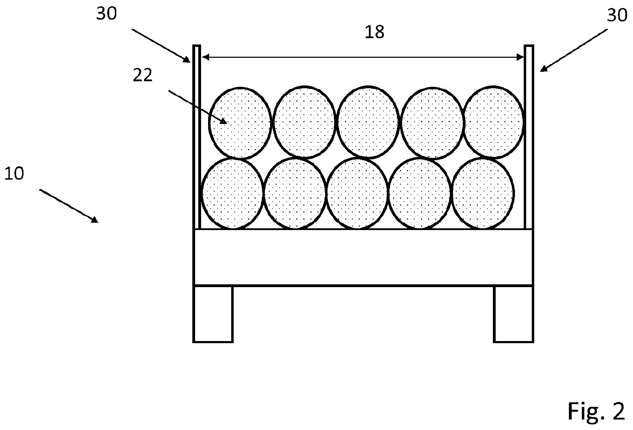

As may be gleaned from Fig. 1, the vehicle entity 10 comprises a load surface 12 adapted to receive a material load such that at least a portion of the material load can be exposed to wind loads. The load surface 12 is associated with a load surface area 14 and a load surface length 16. By way of example, the load surface area 14 may be determined using the load surface length 16 and a load surface width 18 (see Fig. 2), for instance by multiplying the load surface length 16 and the load surface width 18.

Moreover, as indicated in Fig. 1, the vehicle entity 10 has a longitudinal extension in a longitudinal direction L, a transversal extension in a transversal direction T and a vertical extension in a vertical direction V such that when the vehicle entity 10 is supported by a horizontally extending ground surface 20, the vertical direction V is parallel to a normal of the horizontally extending ground surface 20, the longitudinal direction L corresponds to an intended direction of travel of the vehicle entity 10 and the transversal direction T is perpendicular to each one of the longitudinal direction L and the vertical direction V.

The load surface area 14 extends in a plane, the normal of which is parallel to the vertical direction V. It should be noted that the normal of the plane in which the load surface area 14 extends is parallel to the vertical direction V at least when the vehicle entity 10 is in a load receiving condition. As will be elaborated on hereinbelow, the normal of the load surface area plane may form an angle with the vertical direction V in certain operating conditions of the vehicle entity 10.

The load surface length 16 extends in the longitudinal direction L. Each one of the reference side area and the nominal vehicle entity side area extends in a plane, the normal of which is parallel to the transversal direction T.

Fig. 1 and Fig. 2 further illustrate that the vehicle entity 10 can be loaded with a material load 22 which in Fig. 1 and Fig. 2 is exemplified as timber. However, it is of course contemplated that the material load 22 may comprise or be constituted by other materials, such as rocks and/or gravel.

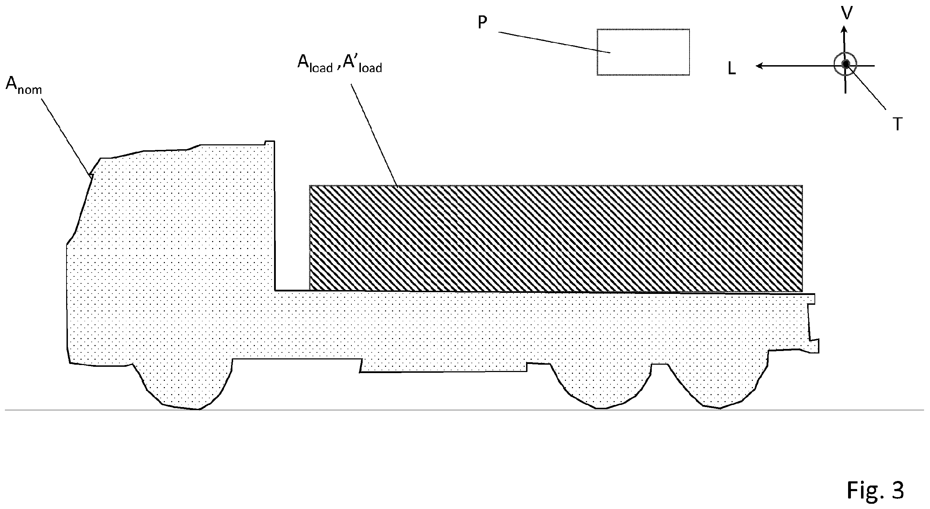

Moreover, as indicated in Fig. 3, the vehicle entity 10 has a nominal vehicle entity side area $A_{nom}$ which is the side area of the vehicle entity 10 when it does not carry any load. Further, when the vehicle entity 10 is loaded with a material load, the material load has a material load surface area $A_{load}$ as also indicated in Fig. 3.

Reverting to Fig. 1, the vehicle entity 10 comprises a control system 24 for determining a reference side area $A_{ref}$ for the vehicle entity 10. The reference side area $\ddot{A}_{ref}$ is adapted to be multiplied with a side force coefficient $C_s$ for determining a side force parameter $C_s A_{ref}$ proportional to a wind side force load $F_{side\_force}$ imparted on the vehicle entity 10 and/or to be multiplied with a lift coefficient $C_l$ for determining a lift parameter $C_l A_{ref}$ proportional to a wind lift load $F_{lift}$ imparted on the vehicle entity 10 and/or to be combined with a drag coefficient $C_d$ for determining a drag load $F_{drag}$ imparted on the vehicle entity 10.

As a general remark, it should be noted that the presentation of the control system 24 according to the present invention is equally applicable to the method of the present invention. Moreover, as a further general remark, although the control system 24 is schematically illustrated as a control unit in Fig. 1, the control system 24 in accordance with the present invention may comprise one or more control units (not shown) connected to each other and operating together.

According to the invention, the control system 24 is adapted to receive density information indicative of a density $\rho$ of material 22 loaded onto the load surface 12. Purely by way of example, the vehicle entity 10 may comprise a density input unit 26 via which an operator can enter the density information. The control system 24 may be adapted to receive the density information from the density input unit 26. However, it is also envisaged that the density information may be received using other means. As a first non-limiting example, the density information may be determined using a system (not shown) that comprises an image sensor, such as a camera, which captures one or more images of the material load to be loaded onto the load surface 12 and which determines density information on the basis of the one or more images. As a second non-limiting example, the density information may be determined using a system (not shown) that comprises a position sensor adapted to determine the current position of the vehicle entity 10 and the system may determine the density information on the basis of position density information associated with the thus determined current position.

Moreover, the control system 24 is adapted to receive weight information indicative of a weight $w_{material}$ of material loaded onto the load surface 12. To this end, though purely by way of example, the vehicle entity 10 may comprise a suspension system 28 and the control system 24 may be adapted to receive information from and/or to issue information to the suspension system 28. The suspension system may be a wheel suspension system as indicated in Fig. 1.

For instance, concerning the above-mentioned weight information, the control system 24 may be adapted to use information from the suspension system 28 as the weight information. Purely by way of example, the control system 24 may be adapted to receive information indicative of the pressure in one or more bellows (not shown) of the suspension system 28 before and after material 22 has been loaded onto the load surface 12 and from the differences between the two pressures determine the weight $w_{material}$ of material 22 loaded onto the load surface 12. As such, in the above example, the weight information comprises, or may even be constituted by, the pressure information from the suspension system 28.

However, it is contemplated that embodiments of the control system 24 may use other means for determining the weight $w_{material}$ of material 22 loaded onto the load surface 12. Purely by way of example, it is envisaged that embodiments of the control system 24 may be adapted to receive information from weighing scales (not shown), such as load cells, onto which the vehicle entity 10 is adapted to be located such that the scales or load cells can determine the weight $w_{material}$ of material 22 loaded onto the load surface 12.

Further, the control system 24 is adapted to use the density information, the weight information, the load surface area 14 and the load surface length 16 in order to determine a material load surface area $A_{load}$ (see Fig. 3). The material load surface area $A_{load}$ extends in a plane P, the normal of which is parallel to the transversal direction T. Moreover, the control system 24 is adapted to use the material load surface area $A_{load}$ and the nominal vehicle entity side area $A_{nom}$ in order to determine the reference side area $A_{ref}$.

For the sake of completeness, it should be noted that each one of the reference side area $A_{ref}$ and the nominal vehicle entity side area $A_{nom}$ also extends in the plane P, the normal of which is parallel to the transversal direction T.

As a non-limiting example, with reference to Fig. 3, the control system 24 may be adapted to determine a material load surface area portion $A'_{load}$ that is not covered by the vehicle entity 10, as seen in the transversal direction T. In Fig. 3, the material load surface area portion $A'_{load}$ is equal to the material load surface area $A_{load}$ since the vehicle entity 10 does not comprise any side panels or the like that covers any portion of the load 22. To this end, it should be noted that the stands 30 (see Fig. 2) are deemed to have a negligible side area. However, in other embodiments of the vehicle entity 10, the material load surface area portion $A'_{load}$ may be smaller than the material load surface area $A_{load}$.

Moreover, the control system 24 may be adapted to add the material load surface area portion $A'_{load}$ to the nominal vehicle entity side area $A_{nom}$ in order to determine the reference side area $A_{ref}$. Put differently, the reference side area $A_{ref}$ may be determined in accordance with the following: $A_{ref}=A_{nom}+A'_{load}$.

Purely by way of example, as exemplified in Fig. 1, the control system 24 may be adapted to:

- use the density information, the weight information and the load surface area 14 to thereby determine a height 32 of the material load, and
- use the height 32 of the material load and the load surface length 16 in order to determine the material load surface area $A_{load}$.

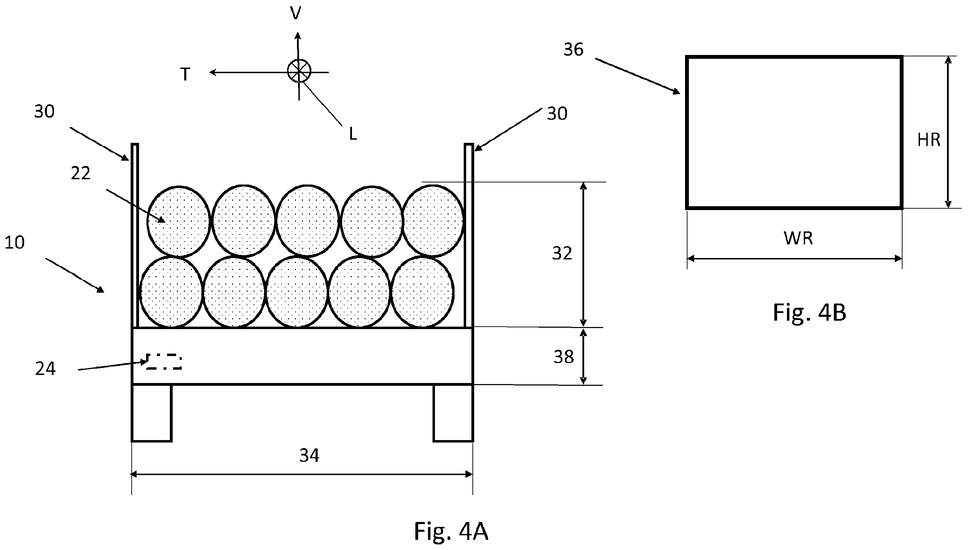

Moreover, with reference to Fig. 4A and Fig. 4B, the control system 24 may be adapted to use a parameter indicative of a width 34 of the vehicle entity 10 in the transversal direction T and to determine the side force coefficient $C_s$ on the basis of at least the width 34 of the vehicle entity 10 and the height 32 of the material load.

As indicated in Fig. 4A and Fig. 4B, the shape of the vehicle entity 10 and the material load 22 in a plane formed by the transversal direction T and the vertical direction V may be approximated by a rectangle 36 having a width WR being equal to the width 34 of the vehicle entity 10 and a height HR being equal to the sum of the height 32 of the material load and a height 38 of a side portion of the vehicle entity 10. The ratio WR/HR between the width WR and the height HR of the rectangle 36 may be used for determining a side force coefficient $C_s$ for the vehicle entity 10. Purely by way of example, the values in the table presented hereinbelow may be used for determining the side force coefficient $C_s$, assuming that the vehicle entity 10 can be approximated as a rectangle with sharp corners.

| WR/HR | $C_s$ |
|---|---|
| 0.1 | 1.9 |
| 0.5 | 2.5 |
| 0.7 | 2.7 |
| 1.0 | 2.2 |
| 2.0 | 1.7 |
| 3.0 | 1.3 |

It should be noted that the values in the above table are only intended to serve as examples for illustrating that the value of the side force coefficient $C_s$ may be dependent on the ratio WR/HR between the width WR and the height HR of the rectangle 36. In other embodiments of the present invention, other values may be used and/or the side force coefficient $C_s$ may for instance be determined using a function rather than a table.

Reverting to Fig. 1, the control system 24 may be adapted to receive wind information for a wind condition currently acting on the vehicle entity 10. As a non-limiting example presented in Fig. 1, the vehicle entity 10 may comprise a wind sensor 40 adapted to determine the wind information and the control system 24 may be adapted to receive the wind information from the wind sensor 40. However, in other embodiments of the present invention, the control system 24 may be adapted to receive the wind information from other types of information sources. As a non-limiting example, the control system may be adapted to receive wind information from weather services issuing the wind information.

Irrespective of how it is determined, the wind information may be indicative of a wind speed, relative to the vehicle entity 10, and a wind heading, relative to the vehicle entity 10. In embodiments of the invention, the control system 24 is adapted to use the wind information, the reference side area $A_{ref}$ and the side force coefficient $C_s$ for determining a wind side force load imparted on the vehicle entity 10. As a non-limiting example, the wind side force load $F_{side\_force}$ may be determined in accordance with the following:

$$F_{side\_force} = \frac{1}{2}\rho u^2 C_s A_{ref}$$ (Eq. 1)

wherein:

$\rho$     is the density of air;
$u$     is the wind speed in a direction perpendicular to the reference side area $A_{ref}$;
$C_s$     is the side force coefficient, and
$A_{ref}$     is the reference side area.

Purely by way of example, the side force coefficient $C_s$ may be determined in accordance with the above presentation, such as using a table or an equation. However, it is also contemplated that in embodiments of the control system 24, a fixed value for the side force coefficient $C_s$ may be used.

Since the wind speed u in a direction perpendicular to the reference side area $A_{ref}$ is used in Eq. 1 above, a wind speed $v_{wind}$, relative to the vehicle entity 10, and a wind heading $\theta_{wind}$, relative to the vehicle entity 10, may be used for determining the wind speed u in a direction perpendicular to the reference side area $A_{ref}$. As non-limiting example, assuming that the wind heading $\theta_{wind}$, relative to the vehicle entity 10, relates to the angle that is formed between a propagating direction of the wind and the longitudinal direction L, the wind speed $u$ to be used in Eq. 1 may be determined in accordance with the following:

$$u = v_{wind} \sin(\theta_{wind})$$ (Eq. 2)

For the sake of completeness, it should be noted that the wind speed $v_{wind}$, relative to the vehicle entity 10, may be referred to as a "apparent wind" being the wind experienced by the vehicle 10 motion. As such, the apparent wind may be regarded as the sum of the wind speed a moving object would experience in still air plus the velocity of the true wind.

It should be noted that in other implementations of the wind sensor 40, the wind sensor 40 may be adapted to only detect the wind speed in the direction perpendicular to the reference side area $A_{ref}$. In such implementations, Eq. 2 above needs not necessarily be used. Instead, the wind speed $v_{wind}$ detected by the wind sensor 40 may be used directly as $u$ in Eq. 1. The wind side force load $F_{side\_force}$ is a load imparted on the vehicle entity 10 in a direction perpendicular to the reference side area $A_{ref}$. As such, the wind side force load $F_{side\_force}$ will generally extend in a direction parallel to the transversal direction T.

However, when wind acts on the vehicle entity 10, due to e.g. the gap between the vehicle entity 10 and the horizontally extending ground surface 20, the vehicle entity 10 may be imparted a lift force $F_{lift}$ that extends in the vertical direction V and which may be calculated in accordance with the following:

$$F_{lift} = \frac{1}{2}\rho u^2 C_l A_{ref}$$ (Eq. 3)

wherein:

$\rho$     is the density of air;
$u$     is the wind speed in a direction perpendicular to the reference side area $A_{ref}$;
$C_l$     is the lift coefficient, and
$A_{ref}$     is the reference side area.

As for the side force coefficient $C_s$, the lift coefficient $C_l$ may be determined using a table or an equation. However, it is also contemplated that in embodiments of the control system 24, a fixed value for the lift coefficient $C_l$ may be used.

Reverting to the wind side force load, it preferably comprises a wind-imparted roll moment $M_{wind}$ around a roll axle being parallel to the longitudinal direction L. Purely by way of example, the wind-imparted roll moment $M_{wind}$ may be calculated in accordance with the following:

$$M_{wind} = \frac{1}{2}\rho u^2 C_s A_{ref} V_c$$ (Eq. 4)

wherein:

$V_c$    is the vertical centre of the reference side area $A_{ref}$, see e.g. Fig. 1.

As such, again with reference to Fig. 1, the control system 24 may be adapted to determine a vertical centre $V_c$ and/or a longitudinal centre $L_c$ of the reference side area $A_{ref}$ on the basis of at least the nominal vehicle entity side area $A_{nom}$, the density information, the weight information and the load surface area 14. If the longitudinal centre $L_c$ is used in Eq. 4 instead of the vertical centre $V_c$, Eq. 4 would be representative for a yaw moment around a yaw axis $A_{yaw}$ that may extend in the vertical direction V, see Fig. 1. It should also be noted that in embodiments of the control system, the wind-imparted roll moment $M_{wind}$ may be determined using e.g. a combination of the wind side force load $F_{side\_force}$ and the wind lift force $F_{lift}$.

In the above example equations in Eq. 1 - Eq. 4, the side force load $F_{side\_force}$ for instance has been determined using information indicative of the reference side area $A_{ref}$ as well as a wind speed in a direction perpendicular to the reference side area $A_{ref}$. However, it is also contemplated that the reference side area $A_{ref}$ may be used for calculating the side force load $F_{side\_force}$ for instance using other equations.

Purely by way of example, it is envisaged that the side force coefficient $C_s(\theta_{wind})$ may be dependent on the wind heading $\theta_{wind}$, relative to the vehicle entity 10. In a similar vein, the area $A(\theta_{wind})$ exposed to the wind may also be dependent on the wind heading $\theta_{wind}$, relative to the vehicle entity 10. Here, it should be noted that the reference side area $A_{ref}$ may be used when determining the area $A(\theta_{wind})$ exposed to the wind. Purely by way of example, for a wind heading $\theta_{wind}$ of 90°, indicating a wind from the side of the vehicle 10, the area $A(\theta_{wind})$ exposed to the wind may equal the reference side area $A_{ref}$. On the other hand, for a wind heading $\theta_{wind}$ of 0°, indicating a wind from the front of the vehicle 10, the area $A(\theta_{wind})$ exposed to the wind may be independent of the reference side area $A_{ref}$. Moreover, for wind headings $\theta_{wind}$ between 0° and 90°, the area $A(\theta_{wind})$ exposed to the wind may be determined using the reference side area $A_{ref}$ and trigonometric functions. As such, the side force load $F_{side\_force}$ for a certain wind heading $\theta_{wind}$ may be determined in accordance with the following:

$$F_{side\_force} = \frac{1}{2}\rho u^2 C_s(\theta_{wind}) A(\theta_{wind}) \qquad \text{(Eq. 5)}$$

It should be noted that the calculation of the side force load $F_{side\_force}$ as exemplified in Eq. 5 hereinabove also may be applicable to the determination of the lift force $F_{lift}$, a drag force $F_{drag}$ and/or a wind-imparted roll moment $M_{wind}$. As such, in embodiments of the control system 24 and/or the method of the present invention, the lift force $F_{lift}$ may be determined in accordance with the following:

$$F_{lift} = \frac{1}{2}\rho u^2 C_l(\theta_{wind}) A(\theta_{wind}) \qquad \text{(Eq. 6)}$$

wherein:

$\rho$    is the density of air;
$u$    is the wind speed, associated with a certain wind heading $\theta_{wind}$;
$C_l$    is the lift coefficient as a function of the wind heading $\theta_{wind}$, and
$A$    is the area exposed to the wind as a function of the wind heading $\theta_{wind}$.

In a similar vein, a drag force $F_{drag}$ may be determined in accordance with Eq. 7 presented hereinbelow. A drag force $F_{drag}$ is generally a load acting in the longitudinal direction L of the vehicle 10 and may be defined as a force acting in a direction opposite to the direction of travel of the vehicle 10.

$$F_{drag} = \frac{1}{2}\rho u^2 C_d(\theta_{wind}) A(\theta_{wind}) \qquad \text{(Eq. 7)}$$

wherein:

$\rho$    is the density of air;
$u$    is the wind speed, associated with a certain wind heading $\theta_{wind}$;
$C_d$    is the drag coefficient as a function of the wind heading $\theta_{wind}$, and
$A$    is the area exposed to the wind as a function of the wind heading $\theta_{wind}$.

As has been explained hereinabove, the area A exposed to the wind as a function of the wind heading $\theta_{wind}$ may be determined using the reference side area $A_{ref}$.

In a similar vein, though purely by way of example, the wind-imparted roll moment $M_{wind}$ may be determined in accordance with the following:

$$M_{wind} = \frac{1}{2}\rho u^2 C_s(\theta_{wind})A(\theta_{wind})V_c(\theta_{wind})$$

(Eq. 8)

wherein:

$V_c$   is the vertical centre of the area exposed to the wind.

It should be noted that the vertical centre $V_c$ of the area exposed to the wind as presented in Eq. 8 may also be dependent on the wind heading $\theta_{wind}$.

As may be realized from the above, wind induced forces and/or moments may be determined in a plurality of different ways. However, it is generally beneficial to obtain information indicative of the reference side area $A_{ref}$ when performing such determinations.

As has been intimated hereinabove, the vehicle entity 10 may comprise a suspension system 28 and the control system 24 may be adapted to receive information from and/or to issue information to the suspension system 28. Purley by way of example, the control system 24 may be adapted to use information from the suspension system as the weight information.

Instead of, or in addition to, receiving information from the suspension system 28, the control system 24 may be adapted to issue information to the suspension system 28 in dependence on the determined wind side force load $F_{side\_force}$ imparted on the vehicle entity 10.

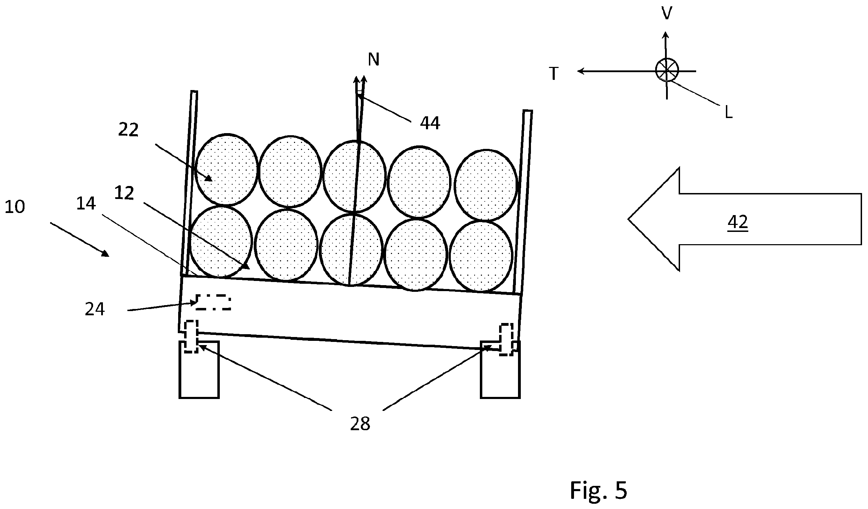

With reference to Fig. 5, though purely by way of example, the control system 24 may be adapted to, in response to detecting that the wind side force load, such as a wind-imparted roll moment $M_{wind}$ imparted on the vehicle entity 10 results in a rollover risk exceeding a predetermined risk threshold, issue information to the suspension system 28 such that the vehicle entity 10 assumes a condition with a static inclination towards a windward side of the vehicle entity 10.

As may be gleaned from Fig. 5, and has been intimated above, the load surface area 14 extends in a plane, the normal N of which generally is parallel to the vertical direction V. However, when subjected to wind, indicated by arrow 42 in Fig. 5, which is deemed to result in a rollover risk exceeding a predetermined risk threshold, the control system 24 may be adapted to issue information to the suspension system 28 such that at least the load surface 12 is tilted towards the wind 42 such that the normal N of the load surface area 14 forms an angle 44 to the vertical direction V. Such an orientation of the load surface 12 may reduce the rollover risk. As a non-limiting example, the angle 44 may be within the range of 1° - 5°.

Instead of, or in addition to, tilting the load surface 12, the control system 24 may be adapted to one or more other actions in response to detecting a rollover risk exceeding a predetermined risk threshold. Purely by way of example, the control system 24 may be adapted to issue a warning signal to the operator of the vehicle 10. As another non-limiting example, the control system 24 may reduce the maximum allowable speed for the vehicle 10 or, alternatively, reduce the current speed of the vehicle 10.

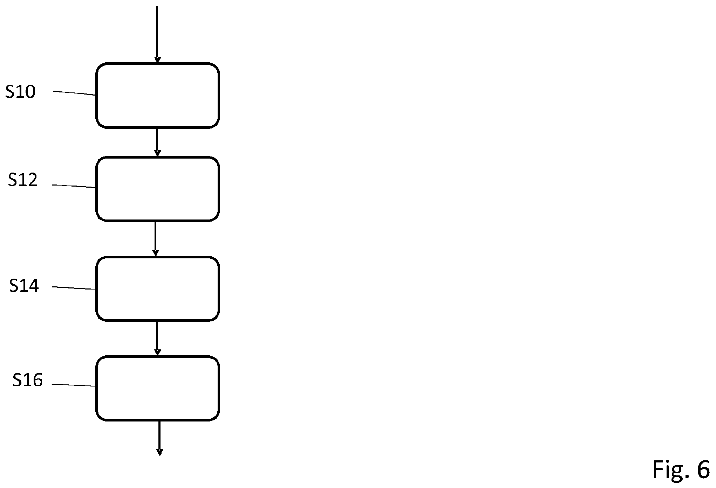

As has been concluded above, the above presentation is equally applicable to the method of the present invention. However, for the sake of completeness, Fig. 6 presents a flowchart illustrating an embodiment of the method according to the present invention.

As such, Fig. 6 is a flowchart of a method for determining a reference side area $A_{ref}$ for a vehicle entity 10. The vehicle entity 10 is a vehicle or a vehicle trailer and has a nominal vehicle entity side area $A_{nom}$. The reference side area $A_{ref}$ is adapted to be multiplied with a side force coefficient $C_s$ for determining a side force parameter proportional to a wind side force load imparted on the vehicle entity 10 and/or to be multiplied with a lift coefficient $C_l$ for determining a lift parameter proportional to a wind lift load imparted on the vehicle entity 10 and/or to be combined with a drag coefficient $C_d$ for determining a drag load $F_{drag}$ imparted on the vehicle entity 10. The vehicle entity 10 comprises a load surface 12 adapted to receive a material load 22 such that at least a portion of the material load 22 can be exposed to wind loads. The load surface 12 is associated with a load surface area 14 and a load surface length 16.

The vehicle entity 10 has a longitudinal extension n a longitudinal direction L, a transversal extension in a transversal direction T and a vertical extension in a vertical direction V such that when the vehicle entity 10 is supported by a horizontally extending ground surface, the vertical direction V is parallel to a normal of the horizontally extending ground surface. The longitudinal direction L corresponds to an intended direction of travel of the vehicle entity and the transversal direction T is perpendicular to each one of the longitudinal direction L and the vertical direction V.

The load surface area 14 extends in a plane, the normal of which is parallel to the vertical direction V. The load surface length 16 extends in the longitudinal direction. Each one of the reference side area $A_{ref}$ and the nominal vehicle entity side area $A_{nom}$ extends in a plane P, the normal of which is parallel to the transversal direction T.

With reference to Fig. 6, the method comprises:

S10: receiving density information indicative of a density $\rho$ of material loaded onto the load surface 12;

S12: receiving weight information indicative of a weight $w_{material}$ of material loaded onto the load surface 12;

S14: using the density information, the weight information, the load surface area 14 and the load surface length 16 in order to determine a material load surface area $A_{load}$, the material load surface area $A_{load}$ extending in a plane P, the normal of which is parallel to the transversal direction T, and

S16: using the material load surface area $A_{load}$ and the nominal vehicle entity side area $A_{nom}$ in order to determine the reference side area $A_{ref}$.

It is to be understood that the present invention is not limited to the embodiments described above and illustrated in the drawings; rather, the skilled person will recognize that many changes and modifications may be made within the scope of the appended claims.

**Claims**

1. A control system (24) for determining a reference side area ($A_{ref}$) for a vehicle entity (10), said vehicle entity (10) being a vehicle or a vehicle trailer and having a nominal vehicle entity side area ($A_{nom}$), said reference side area ($A_{ref}$) being adapted to be multiplied with a side force coefficient ($C_s$) for determining a side force parameter ($C_s A_{ref}$) proportional to a wind side force load ($F_{side\_force}$) imparted on said vehicle entity (10) and/or to be multiplied with a lift coefficient ($C_l$) for determining a lift parameter ($C_l A_{ref}$) proportional to a wind lift load ($F_{lift}$) imparted on said vehicle entity (10) and/or to be combined with a drag coefficient ($C_d$) for determining a drag load ($F_{drag}$) imparted on said vehicle entity (10), said vehicle entity (10) comprising a load surface (12) adapted to receive a material load (22) such that at least a portion of said material load (22) can be exposed to wind loads, said load surface (12) being associated with a load surface area (14) and a load surface length (16),

   said vehicle entity (10) having a longitudinal extension in a longitudinal direction (L), a transversal extension in a transversal direction (T) and a vertical extension in a vertical direction (V) such that when said vehicle entity (10) is supported by a horizontally extending ground surface (20), said vertical direction (V) is parallel to a normal of said horizontally extending ground surface (20), said longitudinal direction (L) corresponding to an intended direction of travel of said vehicle entity (10) and said transversal direction (T) being perpendicular to each one of said longitudinal direction (L) and said vertical direction (V), said load surface area (14) extending in a plane, the normal of which is parallel to said vertical direction (V), said load surface length (16) extending in said longitudinal direction (L), each one of said reference side area ($A_{ref}$) and said nominal vehicle entity side area ($A_{nom}$) extending in a plane (P), the normal of which is parallel to said transversal direction (T), said control system (24) being adapted to:

   - receive density information indicative of a density ($\rho$) of material (22) loaded onto said load surface (12);
   - receive weight information indicative of a weight of material (22) loaded onto said load surface (12);
   - use said density information, said weight information, said load surface area (14) and said load surface length (16) in order to determine a material load surface area ($A_{load}$), said material load surface area ($A_{load}$) extending in a plane (P), the normal of which is parallel to said transversal direction (T), and
   - use said material load surface area ($A_{load}$) and said nominal vehicle entity side area ($A_{nom}$) in order to determine said reference side area ($A_{ref}$).

2. The control system (24) according to claim 1, wherein said control system (24) is adapted to:

   - determine a material load surface area ($A_{load}$) portion that is not covered by said vehicle entity (10), as seen in said transversal direction (T), and
   - add said material load surface area ($A_{load}$) portion to said nominal vehicle entity side area ($A_{nom}$) in order to determine said reference side area ($A_{ref}$).

3. The control system (24) according to claim 1 or claim 2, wherein said control system (24) is adapted to:

   - use said density information, said weight information and said load surface area (14) to thereby determine a height (32) of said material load (22), and
   - use said height (32) of said material load (22) and said load surface length (16) in order to determine said material load surface area ($A_{load}$).

4. The control system (24) according to 3, wherein said control system (24) is adapted to use a parameter indicative of a width of said vehicle entity (10) in said transversal direction (T) and to determine said side force coefficient ($C_s$) on the

basis of at least said width of said vehicle entity (10) and said height of said material load (22).

5. The control system (24) according to any one of the preceding claims, wherein said control system (24) is adapted to receive wind information for a wind condition currently acting on said vehicle entity (10), said wind information being indicative of a wind speed, relative to said vehicle entity (10), and a wind heading, relative to said vehicle entity (10), said control system (24) being adapted to use said wind information, said reference side area ($A_{ref}$) and said side force coefficient ($C_s$) for determining a wind side force load ($F_{side\_force}$) imparted on said vehicle entity (10), preferably said wind side force load ($F_{side\_force}$) comprising a wind-imparted roll moment around a roll axle being parallel to said longitudinal direction (L).

6. The control system (24) according to any one of the preceding claims, wherein said control system (24) is adapted to receive wind information for a wind condition currently acting on said vehicle entity (10), said wind information being indicative of a wind speed, relative to said vehicle entity (10), and a wind heading, relative to said vehicle entity (10), said control system (24) being adapted to use said wind information, said reference side area ($A_{ref}$) and a lift coefficient ($C_l$) for determining a wind lift load ($F_{lift}$) imparted on said vehicle entity (10).

7. The control system (24) according to any one of the preceding claims, wherein said control system (24) is adapted to determine a vertical centre ($V_c$) and/or a longitudinal centre ($L_c$) of said reference side area ($A_{ref}$) on the basis of at least said nominal vehicle entity side area ($A_{nom}$), said density information, said weight information and said load surface area (14).

8. The control system (24) according to any one of the preceding claims, wherein said vehicle entity (10) comprises a suspension system (28) and wherein said control system (24) is adapted to receive information from and/or to issue information to said suspension system (28), preferably said control system (24) is adapted to use information from said suspension system (28) as said weight information.

9. The control system (24) according to claim 8, when dependent on claim 5, wherein said control system (24) is adapted to issue information to said suspension system (28) in dependence on the determined wind side force load ($F_{side\_force}$) imparted on said vehicle entity (10).

10. The control system (24) according to claim 9, wherein said control system (24) is adapted to, in response to detecting that the wind side force load ($F_{side\_force}$) imparted on said vehicle entity (10) results in a rollover risk exceeding a predetermined risk threshold, issue information to said suspension system (28) such that said vehicle entity (10) assumes a condition with a static inclination towards a windward side of said vehicle entity (10).

11. A vehicle entity (10) being a vehicle or a vehicle trailer and having a nominal vehicle entity side area ($A_{nom}$), said vehicle entity (10) comprising a load surface (12) adapted to receive a material load (22) such that at least a portion of said material load (22) can be exposed to wind loads, said load surface (12) being associated with a load surface area (14) and a load surface length (16),

said vehicle entity (10) having a longitudinal extension in a longitudinal direction (L), a transversal extension in a transversal direction (T) and a vertical extension in a vertical direction (V) such that when said vehicle entity (10) is supported by a horizontally extending ground surface (20), said vertical direction (V) is parallel to a normal of said horizontally extending ground surface (20), said longitudinal direction (L) corresponding to an intended direction of travel of said vehicle entity (10) and said transversal direction (T) being perpendicular to each one of said longitudinal direction (L) and said vertical direction (V), said load surface area (14) extending in a plane, the normal of which is parallel to said vertical direction (V), said load surface length (16) extending in said longitudinal direction (L), each one of said reference side area ($A_{ref}$) and said nominal vehicle entity side area ($A_{nom}$) extending in a plane (P), the normal of which is parallel to said transversal direction (T), said vehicle entity (10) comprising a control system (24) according to any one of the preceding claims.

12. The vehicle entity (10) according to claim 11, wherein said vehicle entity (10) comprises a suspension system (28) adapted to issue information indicative of the condition of said suspension system (28).

13. The vehicle entity (10) according to claim 11 or 12, wherein said vehicle entity (10) comprises a wind sensor (40) adapted to determine wind information for a wind load currently imparted on said vehicle entity (10), said wind information being indicative of a wind speed, relative to said vehicle entity (10), and a wind heading, relative to said vehicle entity (10), preferably said control system (24) is adapted to receive said wind information from said wind

**EP 4 476 108 B1**

sensor.

14. The vehicle entity (10) according to any one of claims 11 to 13, wherein said vehicle entity (10) comprises a density input unit (26) via which an operator can enter said density information, preferably said control system (24) is adapted to receive said density information from said density input unit (26).

15. A method for determining a reference side area ($A_{ref}$) for a vehicle entity (10), said vehicle entity (10) being a vehicle or a vehicle trailer and having a nominal vehicle entity side area ($A_{nom}$), said reference side area ($A_{ref}$) being adapted to be multiplied with a side force coefficient ($C_s$) for determining a side force parameter ($C_sA_{ref}$) proportional to a wind side force load imparted on said vehicle entity (10) and/or to be multiplied with a lift coefficient ($C_l$) for determining a lift parameter ($C_lA_{ref}$) proportional to a wind lift load ($F_{lift}$) imparted on said vehicle entity (10) and/or to be combined with a drag coefficient ($C_d$) for determining a drag load ($F_{drag}$) imparted on said vehicle entity (10), said vehicle entity (10) comprising a load surface (12) adapted to receive a material load (22) such that at least a portion of said material load (22) can be exposed to wind loads, said load surface (12) being associated with a load surface area (14) and a load surface length (16),
said vehicle entity (10) having a longitudinal extension in a longitudinal direction (L), a transversal extension in a transversal direction (T) and a vertical extension in a vertical direction (V) such that when said vehicle entity (10) is supported by a horizontally extending ground surface (20), said vertical direction (V) is parallel to a normal of said horizontally extending ground surface (20), said longitudinal direction (L) corresponding to an intended direction of travel of said vehicle entity (10) and said transversal direction (T) being perpendicular to each one of said longitudinal direction (L) and said vertical direction (V), said load surface area (14) extending in a plane, the normal of which is parallel to said vertical direction (V), said load surface length (16) extending in said longitudinal direction (L), each one of said reference side area ($A_{ref}$) and said nominal vehicle entity side area ($A_{nom}$) extending in a plane (P), the normal of which is parallel to said transversal direction (T), said method comprising:

- receiving density information indicative of a density ($\rho$) of material (22) loaded onto said load surface (12);
- receiving weight information indicative of a weight of material (22) loaded onto said load surface (12);
- using said density information, said weight information, said load surface area (14) and said load surface length (16) in order to determine a material load surface area ($A_{load}$), said material load surface area ($A_{load}$) extending in a plane (P), the normal of which is parallel to said transversal direction (T), and
- using said material load surface area ($A_{load}$) and said nominal vehicle entity side area ($A_{nom}$) in order to determine said reference side area ($A_{ref}$).

**Patentansprüche**

1. Steuersystem (24) zum Bestimmen eines Referenzseitenbereichs ($A_{ref}$) für eine Fahrzeugentität (10), wobei die Fahrzeugentität (10) ein Fahrzeug oder ein Fahrzeuganhänger ist und einen nominalen Fahrzeugentitätsseitenbereich ($A_{nom}$) aufweist, wobei der Referenzseitenbereich ($A_{ref}$) angepasst ist, um mit einem Seitenkraftkoeffizienten ($C_s$) zum Bestimmen eines Seitenkraftparameters ($C_sA_{ref}$) multipliziert zu werden, der proportional zu einer Windseitenkraftlast ($F_{Seite\_Kraft}$) ist, die auf die Fahrzeugentität (10) ausgeübt wird, und/oder um mit einem Auftriebskoeffizienten ($C_l$) zum Bestimmen eines Auftriebsparameters ($C_lA_{ref}$) multipliziert zu werden, der proportional zu einer Windauftriebslast ($F_{Auftrieb}$) ist, die auf die Fahrzeugentität (10) ausgeübt wird, und/oder um mit einem Strömungswiderstandskoeffizienten ($C_d$) zum Bestimmen eines Strömungswiderstands ($F_{Strömungswiderstand}$) kombiniert zu werden, der auf die Fahrzeugentität (10) ausgeübt wird, die Fahrzeugentität (10) umfassend eine Ladeoberfläche (12), die angepasst ist, um eine Materiallast (22) derart zu empfangen, dass mindestens ein Teil der Materiallast (22) Windlasten ausgesetzt werden kann, wobei die Ladeoberfläche (12) mit einem Ladeoberflächenbereich (14) und einer Ladeoberflächenlänge (16) verknüpft ist,
wobei die Fahrzeugentität (10) eine Längserstreckung in einer Längsrichtung (L), eine Quererstreckung in einer Querrichtung (T) und eine Vertikalerstreckung in einer Vertikalrichtung (V) aufweist, derart, dass wenn die Fahrzeugentität (10) durch eine sich horizontal erstreckende Bodenoberfläche (20) getragen wird, die Vertikalrichtung (V) parallel zu einer Normalen der sich horizontal erstreckenden Bodenoberfläche (20) ist, wobei die Längsrichtung (L) einer beabsichtigten Fahrtrichtung der Fahrzeugentität (10) entspricht und die Querrichtung (T) senkrecht zu jeweils der Längsrichtung (L) und der Vertikalrichtung (V) ist, wobei sich die Ladeoberfläche (14) in einer Ebene erstreckt, deren Normale parallel zu der Vertikalrichtung (V) ist, wobei sich die Ladeoberflächenlänge (16) in der Längsrichtung (L) erstreckt, wobei sich jeweils der Referenzseitenbereich ($A_{ref}$) und der nominale Fahrzeugentitätsseitenbereich ($A_{nom}$) in einer Ebene (P) erstrecken, deren Normale parallel zu der Querrichtung (T) ist, wobei das Steuersystem (24) angepasst ist zum:

- Empfangen von Dichteinformationen, die eine Dichte ($\rho$) von Material (22) anzeigen, das auf die Ladeoberfläche (12) geladen ist;
- Empfangen von Gewichtsinformationen, die ein Gewicht von Material (22) anzeigen, das auf die Ladeoberfläche (12) geladen ist;
- Verwenden der Dichteinformationen, der Gewichtsinformationen, des Lastoberflächenbereichs (14) und der Lastoberflächenlänge (16), um einen Materiallastoberflächenbereich ($A_{Last}$) zu bestimmen, wobei sich der Materiallastoberflächenbereich ($A_{Last}$) in einer Ebene (P) erstreckt, deren Normale parallel zu der Querrichtung (T) ist, und
- Verwenden des Materiallastoberflächenbereichs ($A_{Last}$) und des nominalen Fahrzeugentitätsseitenbereichs ($A_{nom}$), um den Referenzseitenbereich ($A_{ref}$) zu bestimmen.

2. Steuersystem (24) nach Anspruch 1, wobei das Steuersystem (24) angepasst ist zum:

- Bestimmen eines Abschnitts des Materiallastoberflächenbereichs ($A_{Last}$), der nicht durch die Fahrzeugentität (10) bedeckt ist, wie in der Querrichtung (T) gesehen, und
- Addieren des Abschnitts des Materiallastoberflächenbereichs ($A_{Last}$) zu dem nominalen Fahrzeugentitätsseitenbereich ($A_{nom}$), um den Referenzseitenbereich ($A_{ref}$) zu bestimmen.

3. Steuersystem (24) nach Anspruch 1 oder 2, wobei das Steuersystem (24) ferner angepasst ist zum:

- Verwenden der Dichteinformationen, der Gewichtsinformationen und des Lastoberflächenbereichs (14), um dadurch eine Höhe (32) der Materiallast (22) zu bestimmen, und
- Verwenden der Höhe (32) der Materiallast (22) und der Lastoberflächenlänge (16), um den Materiallastoberflächenbereich ($A_{Last}$) zu bestimmen.

4. Steuersystem (24) nach 3, wobei das Steuersystem (24) angepasst ist, um einen Parameter zu verwenden, der eine Breite der Fahrzeugentität (10) in der Querrichtung (T) anzeigt, und um den Seitenkraftkoeffizienten ($C_s$) auf der Basis von mindestens der Breite der Fahrzeugentität (10) und der Höhe der Materiallast (22) zu bestimmen.

5. Steuersystem (24) nach einem der vorstehenden Ansprüche, wobei das Steuersystem (24) angepasst ist, um Windinformationen für einen Windzustand zu empfangen, der derzeit auf die Fahrzeugentität (10) einwirkt, wobei die Windinformationen eine Windgeschwindigkeit relativ zu der Fahrzeugentität (10) und eine Windrichtung relativ zu der Fahrzeugentität (10) anzeigen, wobei das Steuersystem (24) angepasst ist, um die Windinformationen, den Referenzseitenbereich ($A_{ref}$) und den Seitenkraftkoeffizienten ($C_s$) zum Bestimmen einer Windseitenkraftlast ($F_{Seite\_Kraft}$) zu verwenden, die auf die Fahrzeugentität (10) ausgeübt wird, vorzugsweise die Windseitenkraftlast ($F_{Seite\_Kraft}$) umfassend ein durch Wind ausgeübtes Rollmoment um eine Rollachse, die parallel zu der Längsrichtung (L) ist.

6. Steuersystem (24) nach einem der vorstehenden Ansprüche, wobei das Steuersystem (24) angepasst ist, um Windinformationen für einen Windzustand zu empfangen, der derzeit auf die Fahrzeugentität (10) einwirkt, wobei die Windinformationen eine Windgeschwindigkeit relativ zu der Fahrzeugentität (10) und eine Windrichtung relativ zu der Fahrzeugentität (10) anzeigen, wobei das Steuersystem (24) angepasst ist, um die Windinformationen, den Referenzseitenbereich ($A_{ref}$) und einen Auftriebskoeffizienten ($C_l$) zum Bestimmen einer Windauftriebslast ($F_{Auftrieb}$) zu verwenden, die auf die Fahrzeugentität (10) ausgeübt wird.

7. Steuersystem (24) nach einem der vorstehenden Ansprüche, wobei das Steuersystem (24) angepasst ist, um ein vertikales Zentrum ($V_c$) und/oder ein longitudinales Zentrum ($L_c$) des Referenzseitenbereichs ($A_{ref}$) auf der Basis von mindestens dem nominalen Fahrzeugentitätsseitenbereich ($A_{nom}$), den Dichteinformationen, den Gewichtsinformationen und dem Ladeoberflächenbereich (14) zu bestimmen.

8. Steuersystem (24) nach einem der vorstehenden Ansprüche, wobei die Fahrzeugentität (10) ein Federungssystem (28) umfasst und wobei das Steuersystem (24) angepasst ist, um Informationen von dem Federungssystem (28) zu empfangen und/oder um Informationen daran zu übermitteln, vorzugsweise das Steuersystem (24) angepasst ist, um Informationen von dem Federungssystem (28) als die Gewichtsinformationen zu verwenden.

9. Steuersystem (24) nach Anspruch 8, wenn abhängig von Anspruch 5, wobei das Steuersystem (24) angepasst ist, um Informationen an das Federungssystem (28) in Abhängigkeit von der bestimmten Windseitenkraftlast ($F_{Seite\_Kraft}$) zu übermitteln, die auf die Fahrzeugentität (10) ausgeübt wird.

10. Steuersystem (24) nach Anspruch 9, wobei das Steuersystem (24) angepasst ist, um als Reaktion auf ein Erkennen, dass die Windseitenkraftlast ($F_{Seite\_Kraft}$), die auf die Fahrzeugentität (10) ausgeübt wird, zu einem Überschlagrisiko führt, das eine vorbestimmte Risikoschwelle überschreitet, Informationen an das Federungssystem (28) derart zu übermitteln, dass die Fahrzeugentität (10) einen Zustand mit einer statischen Neigung zu einer Windseite der Fahrzeugentität (10) annimmt.

11. Fahrzeugentität (10), die ein Fahrzeug oder einen Fahrzeuganhänger darstellt und einen nominalen Fahrzeugentitätsseitenbereich ($A_{nom}$) aufweist, die Fahrzeugentität (10) umfassend eine Ladeoberfläche (12), die angepasst ist, um eine Materiallast (22) derart zu empfangen, dass mindestens ein Abschnitt der Materiallast (22) Windlasten ausgesetzt werden kann, wobei die Ladeoberfläche (12) mit einer Ladeoberfläche (14) und einer Ladeoberflächenlänge (16) verknüpft ist,

wobei die Fahrzeugentität (10) eine Längserstreckung in einer Längsrichtung (L), eine Quererstreckung in einer Querrichtung (T) und eine Vertikalerstreckung in einer Vertikalrichtung (V) aufweist, derart, dass wenn die Fahrzeugentität (10) durch eine sich horizontal erstreckende Bodenoberfläche (20) getragen wird, die Vertikalrichtung (V) parallel zu einer Normalen der sich horizontal erstreckenden Bodenoberfläche (20) ist, wobei die Längsrichtung (L) einer beabsichtigten Fahrtrichtung der Fahrzeugentität (10) entspricht und die Querrichtung (T) senkrecht zu jeweils der Längsrichtung (L) und der Vertikalrichtung (V) ist, wobei sich die Ladeoberfläche (14) in einer Ebene erstreckt, deren Normale parallel zu der Vertikalrichtung (V) ist, wobei sich die Ladeoberflächenlänge (16) in der Längsrichtung (L) erstreckt, wobei sich jeweils der Referenzseitenbereich ($A_{ref}$) und der nominale Fahrzeugentitätsseitenbereich ($A_{nom}$) in einer Ebene (P) erstrecken, deren Normale parallel zu der Querrichtung (T) ist,
die Fahrzeugeinheit (10) umfassend ein Steuersystem (24) nach einem der vorstehenden Ansprüche.

12. Fahrzeugentität (10) nach Anspruch 11, wobei die Fahrzeugentität (10) ein Federungssystem (28) umfasst, das angepasst ist, um Informationen zu übermitteln, die den Zustand des Federungssystems (28) anzeigen.

13. Fahrzeugentität (10) nach Anspruch 11 oder 12, wobei die Fahrzeugentität (10) einen Windsensor (40) umfasst, der angepasst ist, um Windinformationen für eine Windlast zu bestimmen, die derzeit auf die Fahrzeugentität (10) einwirkt, wobei die Windinformationen eine Windgeschwindigkeit relativ zu der Fahrzeugentität (10) und eine Windrichtung relativ zu der Fahrzeugentität (10) anzeigen, vorzugsweise das Steuersystem (24) angepasst ist, um die Windinformationen von dem Windsensor zu empfangen.

14. Fahrzeugentität (10) nach einem der Ansprüche 11 bis 13, wobei die Fahrzeugentität (10) eine Dichteeingabeeinheit (26) umfasst, über die ein Bediener die Dichteinformationen eingeben kann, vorzugsweise das Steuersystem (24) angepasst ist, um die Dichteinformationen von der Dichteeingabeeinheit (26) zu empfangen.

15. Verfahren zum Bestimmen eines Referenzseitenbereichs ($A_{ref}$) für eine Fahrzeugentität (10), wobei die Fahrzeugentität (10) ein Fahrzeug oder ein Fahrzeuganhänger ist und einen nominalen Fahrzeugentitätsseitenbereich ($A_{nom}$) aufweist, wobei der Referenzseitenbereich ($A_{ref}$) angepasst ist, um mit einem Seitenkraftkoeffizienten ($C_s$) zum Bestimmen eines Seitenkraftparameters ($C_s A_{ref}$) multipliziert zu werden, der proportional zu einer Windseitenkraftlast ist, die auf die Fahrzeugentität (10) ausgeübt wird, und/oder um mit einem Auftriebskoeffizienten ($C_l$) zum Bestimmen eines Auftriebsparameters ($C_l A_{ref}$) multipliziert zu werden, der proportional zu einer Windauftriebslast ($F_{Auftrieb}$) ist, die auf die Fahrzeugentität (10) ausgeübt wird, und/oder um mit einem Strömungswiderstandskoeffizienten ($C_d$) zum Bestimmen eines Strömungswiderstands ($F_{Strömungswiderstand}$) kombiniert zu werden, der auf die Fahrzeugentität (10) ausgeübt wird, die Fahrzeugentität (10) umfassend eine Ladeoberfläche (12), die angepasst ist, um eine Materiallast (22) derart zu empfangen, dass mindestens ein Teil der Materiallast (22) Windlasten ausgesetzt werden kann, wobei die Ladeoberfläche (12) mit einem Ladeoberflächenbereich (14) und einer Ladeoberflächenlänge (16) verknüpft ist,
wobei die Fahrzeugentität (10) eine Längserstreckung in einer Längsrichtung (L), eine Quererstreckung in einer Querrichtung (T) und eine Vertikalerstreckung in einer Vertikalrichtung (V) aufweist, derart, dass wenn die Fahrzeugentität (10) durch eine sich horizontal erstreckende Bodenoberfläche (20) getragen wird, die Vertikalrichtung (V) parallel zu einer Normalen der sich horizontal erstreckenden Bodenoberfläche (20) ist, wobei die Längsrichtung (L) einer beabsichtigten Fahrtrichtung der Fahrzeugentität (10) entspricht und die Querrichtung (T) senkrecht zu jeweils der Längsrichtung (L) und der Vertikalrichtung (V) ist, wobei sich die Ladeoberfläche (14) in einer Ebene erstreckt, deren Normale parallel zu der Vertikalrichtung (V) ist, wobei sich die Ladeoberflächenlänge (16) in der Längsrichtung (L) erstreckt, wobei sich jeweils der Referenzseitenbereich ($A_{ref}$) und der nominale Fahrzeugentitätsseitenbereich ($A_{nom}$) in einer Ebene (P) erstrecken, deren Normale parallel zu der Querrichtung (T) ist, das Verfahren umfassend:

- Empfangen von Dichteinformationen, die eine Dichte ($\rho$) von Material (22) anzeigen, das auf die Ladeoberfläche (12) geladen ist;
- Empfangen von Gewichtsinformationen, die ein Gewicht von Material (22) anzeigen, das auf die Ladeoberfläche (12) geladen ist;
- Verwenden der Dichteinformationen, der Gewichtsinformationen, des Lastoberflächenbereichs (14) und der Lastoberflächenlänge (16), um einen Materiallastoberflächenbereich ($A_{Last}$) zu bestimmen, wobei sich der Materiallastoberflächenbereich ($A_{Last}$) in einer Ebene (P) erstreckt, deren Normale parallel zu der Querrichtung (T) ist, und
- Verwenden des Materiallastoberflächenbereichs ($A_{Last}$) und des nominalen Fahrzeugentitätsseitenbereichs ($A_{nom}$), um den Referenzseitenbereich ($A_{ref}$) zu bestimmen.

**Revendications**

1. Système de commande (24) permettant de déterminer une superficie latérale de référence ($A_{ref}$) pour une entité de véhicule (10), ladite entité de véhicule (10) étant un véhicule ou une remorque de véhicule et ayant une superficie latérale d'entité de véhicule nominale ($A_{nom}$), ladite superficie latérale de référence ($A_{ref}$) étant conçue pour être multipliée par un coefficient de force latérale ($C_s$) pour la détermination d'un paramètre de force latérale ($C_s A_{ref}$) proportionnel à une charge de force latérale de vent ($F_{side\_force}$) transmise à ladite entité de véhicule (10) et/ou pour être multipliée par un coefficient de portance ($C_l$) pour la détermination d'un paramètre de portance ($C_l A_{ref}$) proportionnel à une charge de portance de vent ($F_{lift}$) transmise à ladite entité de véhicule (10) et/ou pour être combinée avec un coefficient de traînée ($C_d$) pour la détermination d'une charge de traînée ($F_{drag}$) transmise à ladite entité de véhicule (10), ladite entité de véhicule (10) comprenant une surface de charge (12) conçue pour recevoir une charge de matériau (22) de telle sorte qu'au moins une partie de ladite charge de matériau (22) peut être exposée à des charges de vent, ladite surface de charge (12) étant associée à une superficie de surface de charge (14) et à une longueur de surface de charge (16),

   ladite entité de véhicule (10) ayant une extension longitudinale dans une direction longitudinale (L), une extension transversale dans une direction transversale (T) et une extension verticale dans une direction verticale (V) de telle sorte que lorsque ladite entité de véhicule (10) est supportée par une surface de sol s'étendant horizontalement (20), ladite direction verticale (V) est parallèle à une normale de ladite surface de sol s'étendant horizontalement (20), ladite direction longitudinale (L) correspondant à une direction de déplacement prévue de ladite entité de véhicule (10) et ladite direction transversale (T) étant perpendiculaire à chacune de ladite direction longitudinale (L) et de ladite direction verticale (V), ladite superficie de surface de charge (14) s'étendant dans un plan, dont la normale est parallèle à ladite direction verticale (V), ladite longueur de surface de charge (16) s'étendant dans ladite direction longitudinale (L), chacune de ladite superficie latérale de référence ($A_{ref}$) et de ladite superficie latérale d'entité de véhicule nominale ($A_{nom}$) s'étendant dans un plan (P), dont la normale est parallèle à ladite direction transversale (T), ledit système de commande (24) étant conçu pour :

   - recevoir des informations de densité indiquant une densité ($\rho$) de matériau (22) chargé sur ladite surface de charge (12) ;
   - recevoir des informations de poids indiquant un poids de matériau (22) chargé sur ladite surface de charge (12) ;
   - utiliser lesdites informations de densité, lesdites informations de poids, ladite superficie de surface de charge (14) et ladite longueur de surface de charge (16) afin de déterminer une superficie de surface de charge de matériau ($A_{load}$), ladite superficie de surface de charge de matériau ($A_{load}$) s'étendant dans un plan (P), dont la normale est parallèle à ladite direction transversale (T), et
   - utiliser ladite superficie de surface de charge de matériau ($A_{load}$) et ladite superficie latérale d'entité de véhicule nominale ($A_{nom}$) afin de déterminer ladite superficie latérale de référence ($A_{ref}$).

2. Système de commande (24) selon la revendication 1, dans lequel ledit système de commande (24) est conçu pour :

   - déterminer une partie de superficie de surface de charge de matériau ($A_{load}$) qui n'est pas couverte par ladite entité de véhicule (10), comme vu dans ladite direction transversale (T), et
   - ajouter ladite partie de superficie de surface de charge de matériau ($A_{load}$) à ladite superficie latérale d'entité de véhicule nominale ($A_{nom}$) afin de déterminer ladite superficie latérale de référence ($A_{ref}$).

3. Système de commande (24) selon la revendication 1 ou la revendication 2, dans lequel ledit système de commande (24) est conçu pour :

- utiliser lesdites informations de densité, lesdites informations de poids et ladite superficie de surface de charge (14) pour déterminer de ce fait une hauteur (32) de ladite charge de matériau (22), et
- utiliser ladite hauteur (32) de ladite charge de matériau (22) et ladite longueur de surface de charge (16) afin de déterminer ladite superficie de surface de charge de matériau ($A_{load}$).

4. Système de commande (24) selon 3, dans lequel ledit système de commande (24) est conçu pour utiliser un paramètre indiquant une largeur de ladite entité de véhicule (10) dans ladite direction transversale (T) et pour déterminer ledit coefficient de force latérale ($C_s$) en fonction au moins de ladite largeur de ladite entité de véhicule (10) et de ladite hauteur de ladite charge de matériau (22).

5. Système de commande (24) selon l'une quelconque des revendications précédentes, dans lequel ledit système de commande (24) est conçu pour recevoir des informations de vent pour une condition de vent agissant actuellement sur ladite entité de véhicule (10), lesdites informations de vent indiquant une vitesse de vent, relativement à ladite entité de véhicule (10), et un cap de vent, relativement à ladite entité de véhicule (10), ledit système de commande (24) étant conçu pour utiliser lesdites informations de vent, ladite superficie latérale de référence ($A_{ref}$) et ledit coefficient de force latérale ($C_s$) pour la détermination d'une charge de force latérale de vent ($F_{side\_force}$) transmise à ladite entité de véhicule (10), de préférence ladite charge de force latérale de vent ($F_{side\_force}$) comprenant un moment de roulis transmis par le vent autour d'un axe de roulis étant parallèle à ladite direction longitudinale (L).

6. Système de commande (24) selon l'une quelconque des revendications précédentes, dans lequel ledit système de commande (24) est conçu pour recevoir des informations de vent pour une condition de vent agissant actuellement sur ladite entité de véhicule (10), lesdites informations de vent indiquant une vitesse de vent, relativement à ladite entité de véhicule (10), et un cap de vent, relativement à ladite entité de véhicule (10), ledit système de commande (24) étant conçu pour utiliser lesdites informations de vent, ladite superficie latérale de référence ($A_{ref}$) et un coefficient de portance ($C_l$) pour la détermination d'une charge de portance de vent ($F_{lift}$) transmise à ladite entité de véhicule (10).

7. Système de commande (24) selon l'une quelconque des revendications précédentes, dans lequel ledit système de commande (24) est conçu pour déterminer un centre vertical ($V_c$) et/ou un centre longitudinal ($L_c$) de ladite superficie latérale de référence ($A_{ref}$) en fonction au moins de ladite superficie latérale d'entité de véhicule nominale ($A_{nom}$), desdites informations de densité, desdites informations de poids et de ladite superficie de surface de charge (14).

8. Système de commande (24) selon l'une quelconque des revendications précédentes, dans lequel ladite entité de véhicule (10) comprend un système de suspension (28) et dans lequel ledit système de commande (24) est conçu pour recevoir des informations à partir dudit système de suspension (28) et/ou pour délivrer des informations à celui-ci, de préférence ledit système de commande (24) est conçu pour utiliser des informations provenant dudit système de suspension (28) en guise desdites informations de poids.

9. Système de commande (24) selon la revendication 8, prise en dépendance de la revendication 5, dans lequel ledit système de commande (24) est conçu pour délivrer des informations audit système de suspension (28) en dépendance de la charge de force latérale de vent ($F_{side\_force}$) déterminée transmise à ladite entité de véhicule (10).

10. Système de commande (24) selon la revendication 9, dans lequel ledit système de commande (24) est conçu pour, en réponse à la détection du fait que la charge de force latérale de vent ($F_{side\_force}$) transmise à ladite entité de véhicule (10) entraîne un risque de renversement dépassant un seuil de risque prédéterminé, délivrer des informations audit système de suspension (28) de telle sorte que ladite entité de véhicule (10) adopte une condition avec une inclinaison statique vers un côté au vent de ladite entité de véhicule (10).

11. Entité de véhicule (10) étant un véhicule ou une remorque de véhicule et ayant une superficie latérale d'entité de véhicule nominale ($A_{nom}$), ladite entité de véhicule (10) comprenant une surface de charge (12) conçue pour recevoir une charge de matériau (22) de telle sorte qu'au moins une partie de ladite charge de matériau (22) peut être exposée à des charges de vent, ladite surface de charge (12) étant associée à une superficie de surface de charge (14) et à une longueur de surface de charge (16),

ladite entité de véhicule (10) ayant une extension longitudinale dans une direction longitudinale (L), une extension transversale dans une direction transversale (T) et une extension verticale dans une direction verticale (V) de telle sorte que lorsque ladite entité de véhicule (10) est supportée par une surface de sol s'étendant horizontalement (20), ladite direction verticale (V) est parallèle à une normale de ladite surface de sol s'étendant horizontalement (20), ladite direction longitudinale (L) correspondant à une direction de déplacement prévue de ladite entité de véhicule (10) et ladite direction transversale (T) étant perpendiculaire à chacune de ladite direction longitudinale (L) et de ladite direction verticale (V), ladite superficie de surface de charge (14) s'étendant dans un plan, dont la normale est parallèle à ladite direction verticale (V), ladite longueur de surface de charge (16) s'étendant dans ladite direction longitudinale (L), chacune de ladite superficie latérale de référence ($A_{ref}$) et de ladite superficie latérale d'entité de véhicule nominale ($A_{nom}$) s'étendant dans un plan (P), dont la normale est parallèle à ladite direction transversale (T),
ladite entité de véhicule (10) comprenant un système de commande (24) selon l'une quelconque des revendications précédentes.

12. Entité de véhicule (10) selon la revendication 11, dans laquelle ladite entité de véhicule (10) comprend un système de suspension (28) conçu pour délivrer des informations indiquant la condition dudit système de suspension (28).

13. Entité de véhicule (10) selon la revendication 11 ou 12, dans laquelle ladite entité de véhicule (10) comprend un capteur de vent (40) conçu pour déterminer des informations de vent pour une charge de vent actuellement transmise à ladite entité de véhicule (10), lesdites informations de vent indiquant une vitesse de vent, relativement à ladite entité de véhicule (10), et un cap de vent, relativement à ladite entité de véhicule (10), de préférence ledit système de commande (24) est conçu pour recevoir lesdites informations de vent à partir dudit capteur de vent.

14. Entité de véhicule (10) selon l'une quelconque des
revendications 11 à 13, dans laquelle ladite entité de véhicule (10) comprend une unité de saisie de densité (26) par l'intermédiaire de laquelle un opérateur peut entrer lesdites informations de densité, de préférence ledit système de commande (24) est conçu pour recevoir lesdites informations de densité à partir de ladite unité de saisie de densité (26).

15. Procédé permettant de déterminer une superficie latérale de référence ($A_{ref}$) pour une entité de véhicule (10), ladite entité de véhicule (10) étant un véhicule ou une remorque de véhicule et ayant une superficie latérale d'entité de véhicule nominale ($A_{nom}$), ladite superficie latérale de référence ($A_{ref}$) étant conçue pour être multipliée par un coefficient de force latérale ($C_s$) pour la détermination d'un paramètre de force latérale ($C_s A_{ref}$) proportionnel à une charge de force latérale de vent transmise à ladite entité de véhicule (10) et/ou pour être multipliée par un coefficient de portance ($C_l$) pour la détermination d'un paramètre de portance ($C_l A_{ref}$) proportionnel à une charge de portance de vent ($F_{lift}$) transmise à ladite entité de véhicule (10) et/ou pour être combinée avec un coefficient de traînée ($C_d$) pour la détermination d'une charge de traînée ($F_{drag}$) transmise à ladite entité de véhicule (10), ladite entité de véhicule (10) comprenant une surface de charge (12) conçue pour recevoir une charge de matériau (22) de telle sorte qu'au moins une partie de ladite charge de matériau (22) peut être exposée à des charges de vent, ladite surface de charge (12) étant associée à une superficie de surface de charge (14) et à une longueur de surface de charge (16),
ladite entité de véhicule (10) ayant une extension longitudinale dans une direction longitudinale (L), une extension transversale dans une direction transversale (T) et une extension verticale dans une direction verticale (V) de telle sorte que lorsque ladite entité de véhicule (10) est supportée par une surface de sol s'étendant horizontalement (20), ladite direction verticale (V) est parallèle à une normale de ladite surface de sol s'étendant horizontalement (20), ladite direction longitudinale (L) correspondant à une direction de déplacement prévue de ladite entité de véhicule (10) et ladite direction transversale (T) étant perpendiculaire à chacune de ladite direction longitudinale (L) et de ladite direction verticale (V), ladite superficie de surface de charge (14) s'étendant dans un plan, dont la normale est parallèle à ladite direction verticale (V), ladite longueur de surface de charge (16) s'étendant dans ladite direction longitudinale (L), chacune de ladite superficie latérale de référence ($A_{ref}$) et de ladite superficie latérale d'entité de véhicule nominale ($A_{nom}$) s'étendant dans un plan (P), dont la normale est parallèle à ladite direction transversale (T),
ledit procédé comprenant :

- la réception d'informations de densité indiquant une densité ($\rho$) de matériau (22) chargé sur ladite surface de charge (12) ;
- la réception d'informations de poids indiquant un poids de matériau (22) chargé sur ladite surface de charge (12) ;
- l'utilisation desdites informations de densité, desdites informations de poids, de ladite superficie de surface de charge (14) et de ladite longueur de surface de charge (16) afin de déterminer une superficie de surface de charge de matériau ($A_{load}$), ladite superficie de surface de charge de matériau ($A_{load}$) s'étendant dans un plan (P), dont la normale est parallèle à ladite direction transversale (T), et
- l'utilisation de ladite superficie de surface de charge de matériau ($A_{load}$) et de ladite superficie latérale d'entité de véhicule nominale ($A_{nom}$) afin de déterminer ladite superficie latérale de référence ($A_{ref}$).

Fig. 1

EP 4 476 108 B1

EP 4 476 108 B1

Fig. 2

$A_{load}, A'_{load}$

P

V

L

T

$A_{nom}$

Fig. 3

V

T ←⊗→

L

30 →

22 →

10 →

24 →

30 →

32

38

34

Fig. 4A

36 →

HR

WR

Fig. 4B

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180162400 A1

- DE 102020004986 A1